# EUROPEAN PATENT SPECIFICATION

(11) **EP 3 857 775 B1**
(45) Date of publication and mention of the grant of the patent: **18.09.2024**
(21) Application number: 18935433.5
(22) Date of filing: 28.09.2018
(51) Int. Cl.: H04L 5/00, H04L 27/26, H04W 4/00, H04W 72/04, H04W 88/02

(54) **BURST DETECTION IN WIRELESS COMMUNICATIONS**
BURST-DETEKTION IN DER DRAHTLOSEN KOMMUNIKATION
DÉTECTION DE RAFALES DANS DES COMMUNICATIONS SANS FIL

(43) Date of publication of application: 04.08.2021
(73) Proprietor: Nokia Technologies Oy, 02610 Espoo (FI)
(72) Inventor: TIIROLA, Esa, 90450 Kempele (FI); SCHOBER, Karol, 00440 Helsinki (FI); LUNTTILA, Timo, 02610 Espoo (FI); HAKOLA, Sami, 90450 Kempele (FI)
(74) Representative: Mudge, Kevin
(86) International application number: PCT/FI2018/050703
(87) International publication number: WO 2020/065124

(56) References cited:
- WO-A1-2018/144852
- WO-A1-2018/144852
- WO-A1-2018/174692
- US-A1- 2018 098 308
- US-A1- 2018 098 308
- US-A1- 2018 279 135
- NOKIA ET AL: "On Wideband Operation for NR-U", vol. RAN WG1, no. Gothenburg, Sweden; 20180820 - 20180824, 10 August 2018 (2018-08-10), XP051516198, Retrieved from the Internet <URL:http://www.3gpp.org/ftp/tsg%5Fran/WG1%5FRL1/TSGR1%5F94/Docs/R1%2D1808825%2Ezip> [retrieved on 20180810]
- SAMSUNG: "Frame structure for NR-U", vol. RAN WG1, no. Gothenburg, Sweden; 20180820 - 20180824, 11 August 2018 (2018-08-11), XP051516138, Retrieved from the Internet <URL:http://www.3gpp.org/ftp/tsg%5Fran/WG1%5FRL1/TSGR1%5F94/Docs/R1%2D1808765%2Ezip> [retrieved on 20180811]
- HAMIDI-SEPEHR, F. ET AL.: "5G NR PDCCH: Design and Performance", 2018 IEEE 5G WORLD FORUM (5GWF), 9 July 2018 (2018-07-09), XP033432804, Retrieved from the Internet <URL:https://ieeexplore.ieee.org/document/8517070> [retrieved on 20190104], DOI: 10.1109/5GWF.2018.8517070

## Description

### Field

This disclosure relates transmission burst detection in wireless communication. Certain particular, but not exclusive aspects relate to methods, apparatuses, and computer programs related to New Radio based communications systems. The radio systems can be configured to operate on licenced and/or unlicensed bands.

### Background

A communication system can be seen as a facility that enables communication sessions between two or more entities such as user terminals, machine to machine type terminals, base stations and/or other nodes by providing carriers between the various entities involved in the communications path. A communication system can be provided, for example, by means of a communication network and one or more compatible communication devices. Communication sessions may comprise, for example, communication of data for carrying communications such as voice, electronic mail (email), text message, control data, multimedia and/or content data and so on. Non-limiting examples of services provided comprise two-way or multi-way calls, data communication or multimedia services and access to a data network system, such as the Internet.

In a wireless communication system at least a part of communications between at least two stations occurs over a wireless link. Examples of wireless systems comprise public land mobile networks (PLMN), satellite based communication systems and different wireless local networks, for example wireless local area networks (WLAN).

A user can access a communication system by means of an appropriate communication device or terminal. A wireless communication device of a user is often referred to as user equipment (UE) or mobile station (MS). A communication device is provided with an appropriate signal receiving and transmitting apparatus for enabling communications, for example enabling access to a network and/or communications directly with other users and/or devices such as machine type terminals. The communication device may access a carrier provided by a station, for example a base station, and transmit and/or receive communications on the carrier.

The communication system and devices typically operate in accordance with an architecture defined by a standard or specification which sets out what the various entities are permitted to do and how that should be achieved. Communication protocols and/or parameters which shall be used for the communications are also typically defined. An example of an architecture is the long-term evolution (LTE) of the Universal Mobile Telecommunications System (UMTS) radio-access technology standardized by the 3rd Generation Partnership Project (3GPP). The various development stages of the 3GPP specifications are referred to as releases. A recent development of the standards is fifth generation (5G) New Radio (NR) radio-access technology. One of the aspects of 5G New Radio (NR) is that base stations will support even larger bandwidths than previous releases. Thus release 15 (Rel-15) defines different band scenarios covering carrier frequencies up-to ~52 GHz. The scope of a New Radio Unlicensed (NR-U) items of the standardization is to provide NR support for different unlicensed band scenarios. One exemplary scenario for NR-U is operation at 5 GHz unlicensed spectrum. A new unlicensed spectrum is expected to be available at 6GHz. US2018/098308 describes various aspects of the implementation and design of Physical Downlink Control Channel (PDCCH) in 5G new radio (NR) applications. Aspects include mechanisms for one or more of multiple PDCCH search spaces, control resource block (CRB), irregular multiple slots or mini-slots grants, or fast control channel signaling for grant-free uplink (UL). WO2018/144852 describes a mechanism for transmission and reception of Physical Downlink Control Channels (PDCCHs), whereby, a wireless transmit/receive unit (WTRU) may receive a PDCCH transmission comprising a control channel element (CCE) that is mapped to one or more resource element groups (REGs) based on a CCE-to-REG mapping. The WTRU may receive the CCE-to-REG mapping that indicates a REG bundle corresponding to the CCE and use the CCE-to-REG mapping to identify the REGs for the WTRU. Depending on whether the CCE-to-REG mapping is interleaving or non-interleaving, the CCE-to-REG mapping may be based on different parameters. R1-1808765 "Frame structure for NR-U" 20 to 24-August - 2018, RAN1 WG1 meeting #94, Gothenburg, Sweden, by Samsung, relates to the frame structure for NR-U.

### Summary

The invention is defined by the appended independent claims. Dependent claims constitute embodiments of the invention.

### Description of Figures

Embodiments will now be described, by way of example only, with reference to the accompanying Figures in which:
Figure 1 shows a schematic diagram of an example communication system comprising base stations serving communication devices;
Figure 2a shows a schematic partially sectioned diagram of an example mobile communication device;
Figure 2b shows a schematic diagram of an example control apparatus;
Figures 3 and 4 are flowchart according to certain examples;
Figure 5 shows an example of possible monitoring occasions;
Figure 6 shows four exemplary configurations for a reference signal for transmission burst detection;
Figure 7 shows an example a reference signal for transmission burst detection for detecting a demodulation reference signal carrying certain information; and
Figure 8 shows an example of time domain configuration of a reference signal for transmission burst detection.

### Detailed description

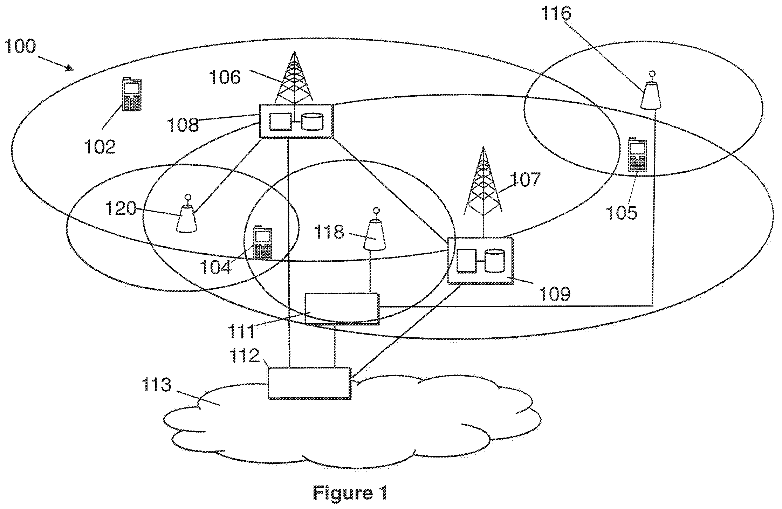

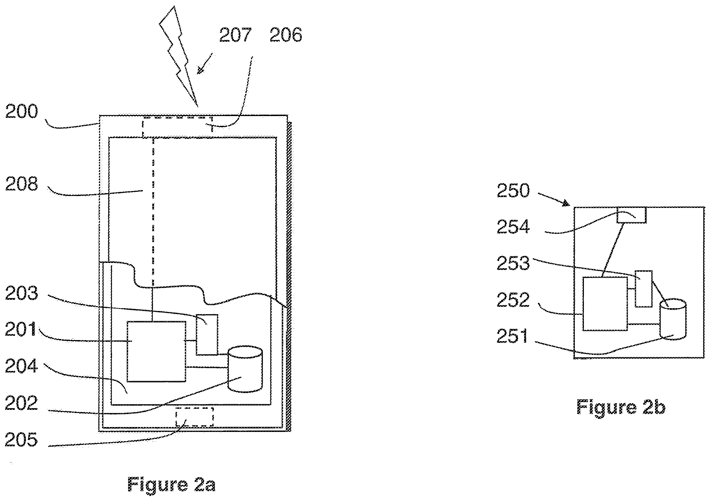

Before explaining in detail examples, certain general principles of a wireless communication system and communication apparatus are briefly explained with reference to Figures 1, 2a and 2b to assist in understanding the technology underlying the described examples.

In a wireless system 100, such as that shown in the schematic example Figure 1, mobile communication devices or user equipment (UE) 102, 104, 105 are provided wireless access via at least one base station or similar wireless transmitting and/or receiving node or access point. Base stations are known by various names, e.g., BTS, NodeB (NB), enhanced NodeB (eNB; a LTE element), gNB (a 5G NR element), and so on but a common feature of all of them is that they are configured to provide access to a network. The serving base station can be also a relay node connected to a wider communications network by via one or more base stations. Base stations are typically controlled by at least one appropriate controller apparatus, so as to enable operation thereof and management of devices in communication with the base stations. The controller apparatus may be located in a radio access network (e.g. wireless communication system 100) or in a core network (CN) (not shown). The controller apparatus may be implemented as one central apparatus or the functionality may be distributed over several apparatus. The controller apparatus may be part of the base station and/or provided by a separate entity such as a radio network controller (RNC). In some systems, the control apparatus may additionally or alternatively be provided in a base station controller (BSC). In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. Some systems, for example certain LTE based systems may be considered to have a so-called "flat" architecture, without the provision of RNCs. Rather the NB is in communication with a system architecture evolution gateway (SAE-GW) and a mobility management entity (MME), which entities may also be pooled meaning that a plurality of these nodes may serve a plurality (set) of gNBs.

In Figure 1 base stations 106 and 107 are shown as connected to a wider communications network 113 via gateway 112. A further gateway function may be provided to connect to another network.

Smaller base stations 116, 118 and 120 may also be provided and connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example WLAN and may be WLAN APs.

A possible communication device will now be described in more detail with reference to Figure 2a showing a schematic, partially sectioned view of a communication device 200 configured for wireless communication. Such a communication device can also be referred to as user equipment (UE), mobile station (MS) or wireless terminal apparatus. A wireless device may be provided by any capable of sending and receiving radio signals. Non-limiting examples comprise a mobile device such as a mobile phone or what is known as a 'smart phone', a computer provided with a wireless interface card or other wireless interface facility (e.g., USB dongle), personal data assistant (PDA) or a tablet provided with wireless communication capabilities, an Internet of things (IoT) device or another machine to machine type device, or any combinations of these or the like. The term "mobile station", may also cover any device configured for movement, e.g. a mobile loT device. The device 200 may provide, for example, communication of data for carrying communications such as voice, electronic mail (email), text message, multimedia, an access to a data communications network system, such as the Internet, and so on. Users may thus be offered and provided numerous services via the communication device.

The device 200 may receive signals over an air or radio interface 207 via appropriate apparatus for receiving (e.g., a receiver). The device may also transmit signals via appropriate apparatus for transmitting radio signals (e.g., a transmitter). In Figure 2a transceiver apparatus is designated schematically by block 206. The transceiver apparatus 206 may be provided for example by means of a radio part and associated antenna arrangement. The antenna arrangement may be arranged internally or externally to the device.

A communication device is typically provided with circuitry comprising at least one data processing entity 201, at least one memory 202 and other possible components 203 for use in software and hardware aided execution of tasks it is designed to perform, including control of access to and communications with access systems and/or other communication devices. The data processing, storage and other relevant control apparatus can be provided on an appropriate circuit board and/or in chipsets. This feature is denoted by reference 204. The user may control the operation of the device 200 by means of a suitable user interface such as key 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

Figure 2b shows an example of a control apparatus and circuitry for a communication system, for example to be coupled to and/or for controlling a station of an access system, such as a RAN node, e.g. a base station, node B (for example eNB or gNB), a central unit of a cloud architecture or a node of a core network such as an MME or S-GW, a scheduling entity, or a server or host. The method may be implanted in a single control apparatus or across more than one control apparatus. The control apparatus may be integrated with or external to a node or module of a core network or RAN. Base stations may comprise a separate control apparatus unit or module. The control apparatus can be provided in a network element such as a radio network controller or a spectrum controller. In some applications, each base station may have such a control apparatus as well as a control apparatus being provided in a radio network controller. The control apparatus 250 can be arranged to provide control on communications in the service area of the system. The control apparatus 250 comprises at least one memory 251, at least one data processing unit 252, 253 and an input/output interface 254. Via the interface the control apparatus can be coupled to a receiver and/or a transmitter of the base station. The receiver and/or the transmitter may be implemented as a radio front end or a remote radio head. For example the control apparatus 250 or processor 251 can be configured to execute an appropriate software code to provide the control functions.

The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), interlaced transmission based on discrete fourier transform (DFT) spread orthogonal frequency division multiplexing (OFDM) or OFDM, single carrier frequency division multiple access (SC-FDMA) and orthogonal frequency division multiple access (OFDMA), space division multiple access (SDMA) and so on. Signalling mechanisms and procedures, which may enable a device to address in-device coexistence (IDC) issues caused by multiple transceivers, may be provided with help from the LTE network. The multiple transceivers may be configured for providing radio access to different radio technologies.

In the following certain examples are described in relation to so called New Radio (NR) based systems where a physical layer design for New Radio - Unlicensed (NR-U) access is provided. In new radio unlicensed (NR-U) there are several wide unlicensed bands (where e.g. 20MHz channelization is adopted at 5GHz spectrum) and a single gNB or a UE can occasionally access very wide bandwidths. Hence, wideband operation is one of the key building blocks for NR-U. Both carrier aggregation and bandwidth part (BWP) mechanisms are supported in the latest agreed releases for NR for wideband operations. NR-U is expected to support both mechanisms to achieve sufficiently versatile support in wideband scenarios.

The New Radio (NR) unlicensed (NR-U) operation has been recently under study in 3GPP fifth generation (5G) standardization, part of the work relating to the physical layer design of the NR-U and LTE Licensed-Assisted Access (LTE LAA). Listen before Talk (LBT) type channel access may be required in some areas causing uncertainty regarding whether or not the transmitter is allowed to transmit on intended resources. In LTE LAA two channel access procedures are defined: Type 1 and Type 2. In Type 1 LBT, a node generates a random number N uniformly distributed over a contention window (where the size of contention window depends on the channel access priority class of the traffic). Once the node has measured the channel to be vacant for N times, it may occupy the channel and transmit. To align the transmission with a LTE subframe (or slot) boundary, the node may need to resort to self-deferral during the LBT procedure. In Type 2 LBT access procedures, a node performs single channel measurement in time intervals of 25 µs before transmission. For physical uplink shared channel (PUSCH) access, this type of LBT may be performed when the eNB shares its channel occupancy time (COT) with the UE). It can be assumed that the LBT functionality described above forms the basis also for LBT functionalities to be defined for NR-U.

In a possible design for a PDCCH DMRS (Demodulation Reference Signal) the PDCCH DMRS is transmitted via an entire control resource set. In 5G NR control resource set information element (hereinafter called CORESET) is described as a resource pool for PDCCH. Control resource set information element includes various fields to address allocation of control channels across entire system bandwidth and ease control of the inter-cell interference. CORESET can be seen analogous to LTE control region but it is generalized in 5G NR with set of resource blocks (RBs) and OFDM symbols. The CORESET defines a time-frequency resource for each configured monitoring occasion. User-specific CORESET within a bandwidth part is configured in units of six physical resource blocks (PRBs) in frequency on a six PRB frequency grid. Frequency allocation in a CORESET configuration can be contiguous or non-contiguous. In time domain, CORESET configuration spans 1 to 3 consecutive OFDM symbols. Resource elements (REs) in CORESET configuration are organized in resource elements groups (REGs). Each REG consists of 12 REs of one OFDM symbol in one RB. CORESET configuration parameters comprise RE, REG, REG bundles, Control Channel Element (CCE), and Aggregation level. A CCE comprises one or more REG bundles, which are sets of adjacent REGs in frequency and time having common precoding. Two configuration options for CCE-to-REG construction are supported: 1) Interleaved CCE-to-REG mapping and 2) non-interleaved CCE-to-REG mapping. With non-interleaved mapping, REG bundle size 6 was chosen for good channel estimation performance. For interleaved mapping, REG bundle size can be configured separately for each CORESET. Each REG carrying PDCCH carries its own DMRS, where 3 out of 12 subcarriers of the REG carry the PDCCH DMRS. Each PDCCH contains a number of Control Channel Elements (CCEs), each CCE containing 6 REGs.

NR PDCCH supports both closed-loop and open-loop precoding with a single antenna port. The latter is achieved by means of precoder cycling. With either precoding scheme, the gNB can select the precoding weights for different transmission (Tx) antennas/beams in a specification transparent manner. The UE needs to know the precoder granularity given by configured REG bundle size, but it does not need to know the precoding weights used by the gNB. Two DMRS strategies have been defined for NR licensed band operation. In the baseline approach gNB conveys both downlink control information (DCI) and DMRS part of the PDCCH only via CCEs carrying PDCCH. When following this approach, gNB applies the same precoding weights for all resource elements within the REG bundle. The second approach is called the wideband DMRS. In this method, when gNB transmits at least one PDCCH via CORESET, it will transmit DMRS via the cluster(s) (cluster being a set of adjacent REGs) of a CORSET containing at least one REG of transmitted PDCCH. The precoder granularity in this option corresponds to the number of contiguous PRBs in the frequency domain, i.e. precoder is constant within each cluster.

When operating according to a NR-U scenario a gNB must perform LBT before it can start transmitting DL transmission (Tx) burst. To meet regulatory requirements and to ensure fair coexistence with other systems, also NR-U is configured to support sub-band LBT of at least with 20 MHz resolution.

When NR is deployed on unlicensed bands requiring contention-based channel access procedure, it is beneficial that a transmitting device can swiftly occupy a channel once the channel access procedure indicates the channel to be vacant. If the device waits for too long in self-deferral to align transmissions with slot boundary, more agile systems may occupy the channel in the meanwhile. It has been agreed that NR-U supports Type-A (slot based) and Type-B (mini-slot -based) mapping, and that additional starting positions and durations are not precluded. Type-B mapping/Mini-slots represents an efficient way to reduce the time between the possible consecutive transmission starting positions. On the other hand, more frequent transmission starting positions may increase downlink (DL) control channel blind decoding burden on the receiver side. Thus a reasonable trade-off between the DL control channel decoding burden and frequency of transmission starting positions may be desired.

One of the key elements in unlicensed operation is transmission burst detection by the receiver. A burst transmission or data burst is commonly understood to refer to a relatively high-bandwidth transmission over a short period. In the considered scenario, the transmission burst detection may be seen as an operation where the receiving apparatus, e.g., an UE determines the starting time of the transmitting apparatus, e.g., a gNB, acquired the COT. The baseline approach for detecting DL transmission in NR licensed band scenarios shall rely on Physical Downlink Control Channel (PDCCH) blind detection. Another or complementary approach is to use new physical layer signals (such as an existing reference signal; RS) for DL burst detection at a receiver. This can be called as a preamble. In LTE Licensed-Assisted Access (LAA; LTE Frame Structure 3), there are cell-specific reference signals (CRS) present in each DL subframe and these can be used also for detecting the DL transmission in different LTE LAA scenarios. The CRS based approach however may not be useable for example in NR-U because New Radio (NR) does not provide any CRS. Thus detecting presence of transmission without unnecessarily increasing the blind detection effort by the receiver might be desirable. This can be addressed by transmitting the PDCCH DMRS via the entire control resource set (CORESET). This can be done at least in the beginning of the DL transmission, provided that CORESET is located at the beginning of the DL transmission. The transmission can be provided, for example, using NR-U wideband (WB) DMRS. An issue with this design can be finding of an optimal balance between detection efficiency and configuration flexibility. This can be problematic, e.g., because there is a connection between CORESET configuration and burst detection performance, the burst detection performance being dependent on the CORESET configuration in both frequency and time. Thus finding a configuration which works well for downlink (DL) burst detection as well as providing sufficient flexibility for CORESET configuration can become a burdensome task. There may also be increased latency for burst detection. A reason for this is that for CORESET configurations having typically two or three OFDM symbols in time burst detection can involve additional latency and may also involve additional buffering at the receiver.

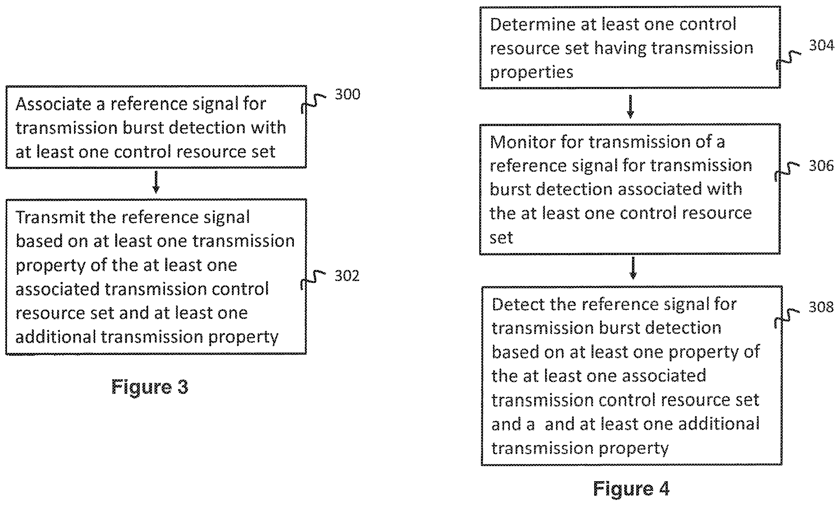

An example for operation addressing these issues is shown in the flowcharts of Figures 3 and 4. In a method for assisting burst detection by a transmitting apparatus shown in Figure 3, a reference signal for burst detection is associated at 300 with at least one transmission control resource set. The reference signal for burst detection is then transmitted at 304 based on at least one some property of the at least one associated transmission control resource set and at least one additional transmission property.

The transmitting apparatus can be for example a base station, e.g., NR gNB. Examples for the two properties are given below when describing more detailed examples.

Figure 4 then shows a method at the receiving end, e.g., at a downlink receiver such as a UE, IoT receiver or the like. At least one control resource set having transmission properties is determined at 304. Monitoring for transmission of a reference signal for transmission burst detection associated with the at least one control resource set follows at 306. At 308 the reference signal for transmission burst detection can be detected based on at least one transmission property of the at least one associated control resource set and at least one additional transmission property.

The following describes mode detailed examples for a design providing an example for a reference signal for burst detection. In the example a burst detection reference signal, hereinafter called BDRS, and related rules regarding use of transmission properties and other features are explained. The described examples are given with reference to transceiver apparatus such as base stations and mobile devices. More particular example of such devices are a NR base station ("gNB") and user equipment (UE).

In accordance with an aspect burst detection is based on first transmission properties that are associated with at least one CORESET, i.e., properties inherited from the properties of the CORESET configuration, and a second, additional transmission properties that not inherited from the CORESET but determined otherwise. The second properties may comprise, e.g., frequency and/or time domain resource allocation of the reference signal.

Signal parameters such as bandwidth and symbol allocation within the CORESET can be configured independently of CORESET configuration parameters. This can provide more flexibility which in turn can help in reducing the burst detection latency.

A BDRS can be associated with a predefined one or more CORESETs. A BDRS can be limited only to a subset of search-space-sets associated with the at least one CORESET. According to a possibility BDRS inclusion is a configuration option for the CORESET and the corresponding DMRS.

Each CORESET may have its own associated BDRS. Thus a BDRS may be associated to one CORESET only. Multiple CORESETs can then have their own BDRS configured, with the same or different characteristics. According to an alternative approach, a BDRS can be separate RRC object and be associated with multiple CORESETs.

A BDRS may inherit the basic properties of the DMRS of the associated CORESET. The basic properties to be inherited can comprise sequence, REG bundle size, DMRS location within the PRB/REG (3 REs/REG) etc. An exception to this can be bandwidth and symbol allocation within the symbol span of the associated CORESET. These can be (e.g. configured to be) different for the BDRS than they are in the associated CORESET.

A BDRS can be provided with a guaranteed minimum bandwidth. A BDRS may be present also in resources outside of the physical resource blocks (PRBs) of the associated CORESET. Within the PRBs of the associated CORESET, the BDRS can overlap with the DMRS of the associated CORESET and occupy predefined resource elements, for example elements [1 5 9], of the PRB. In other words, BDRS can seamlessly at least partially overlap with PDCCH DMRS, because DMRS sequence and PRB bundling size parameters are inherited from the associated CORESET. The configuration can also be such that outside of the bandwidth of the associated CORESET, the BDRS may be present only in the first OFDM symbol determined by a search-space-set of the associated CORESET.

According to a possibility, the minimum bandwidth of a BDRS corresponds to the CORESET bandwidth.

A BDRS sequence for a CORESET other than CORESET#0 may start at Point A, which is the start of a common PRB grid on which the CORESETs are configured and can be used as a common reference point. For CORESET#0, where the DMRS starts at its first PRB of the CORESET#0, the DMRS sequence can be cyclically repeated for PRBs of carrier bandwidth part (BWP) lower than the first PRB. The BWP is a contiguous set of physical resource blocks selected from a contiguous subset of the common resource blocks on a given carrier. CORESETs monitored in a BWP shall be within the span of the BWP.

A BDRS sequence may be an extended sequence of the DMRS of the associated CORESET and cyclically mapped within the bandwidth of the BDRS. The starting position in frequency can be determined by the DMRS. The bandwidth can be e.g. a subband or a set of subbands in case CORESET spans multiple subbands.

BDRS precoding granularity may have various properties. For example, the same granularity may be provided in frequency domain as in the associated CORESET. The same granularity may be provided in time domain as in the associated CORESET.

According to an alternative possibility, in resource of BDRS outside the CORESET, the BDRS may assume the same precoder as the closest CORESET resource element group (REG) bundle. In other words, a CORESET can define a grid of REG bundles also for BDRS.

A UE may assume that a BDRS is present always when the UE has a valid PDCCH monitoring occasion of a given search-space-set in a CORESET and the CORESET is configured with BDRS. This can be used to provide inbuilt support for a mini-slot based operation. Furthermore, such configuration allows multiple opportunities for the UE to detect DL transmission (Tx) burst. This is unlike e.g. preambles which may be present only at the beginning of a transmission, and can be beneficial e.g. when the UE may have missed first, or some of the first, mini-slots and/or slots of the Channel Occupancy Time (COT).

According to an aspect PDCCH monitoring by an UE for NR-U is configured to contain three phases: pre-COT phase, sub-slot phase and FULL-slot phase. In Pre-COT phase, a NR-U UE can perform detection of BDRS in every monitoring occasion. The monitoring occasions in this phase may be configured or pre-defined to be, for example, every symbol or every other symbol. Upon detection of a BDRS, the UE can be configured to switch to Sub-slot phase monitoring. Sub-slot phase can then be used for aligning the ending position of the first transmission(s) of DL Tx burst (such as mini-slots) with the slot boundary. In this phase, the UE can have one or two monitoring occasions, one at the beginning of COT, and the other right after the first mini-slot. Both of the occasions may contain a BDRS based on the configuration. In other words, monitoring occasions in Mini-slot phase can be dynamically determined.

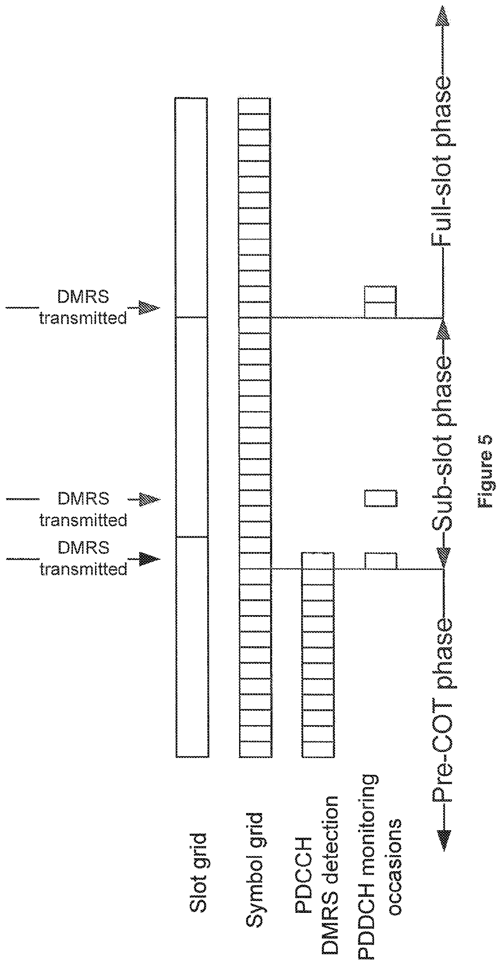

In the FULL-slot phase, the UE can be configured to monitor PDCCH according to configuration similar to NR Rel-15. Each monitoring occasion (based on Type A and/or Type B) may contain a BDRS, based on the configuration. An example of this is shown in Figure 5.

NR capable base station (gNB) can be configured to transmit BDRS according to predefined CORESETs always when it has acquired COT.

Collision handling between BDRS and other signals may also be provided. According to a possibility a BDRS resource configuration may be known by all UEs (e.g. based on RMSI/SIB1 or cell-common information). Physical Downlink Shared Channel (PDSCH) or another CORESET may be semi-statically rate matched around the BDRS. Alternatively, or in addition, PDCCH candidate (or candidates) in other CORESET or CORESETs may be dropped, if these collide with the BDRS resource.

An option is to configure BDRS resource as a rate matching resource for PDSCH. For example, the configuration can be such that PDSCH data is not mapped onto resources configured for BDRS.

Signals sharing the same/similar QCL characteristics can also be multiplexed in the same symbol. For example, in Frequency Range 2 (FR2: 24.25 GHz - 52.6 GHz) or with multi-beam operation in general, signals having the same/similar spatial domain Quasi-co-location (QCL) characteristics may be multiplexed into the same symbol in the same component carrier / carrier bandwidth part (CC/BWP).

Collision handling between multiple BDRS associated with different CORESETs in case monitoring occasions of multiple CORESETs are present in the same time instances may also require consideration. According to a possibility for a time instance (a slot or a symbol, i.e. a PDCCH monitoring occasion) where multiple CORESETs occur, a BDRS selected to be transmitted can be the BDRS having a predefined CORESET identity (ID). For example, an associated CORESET that has the lowest (i.e. '0') or the highest CORESET ID can be selected. The BDRS can also be the one with associated CORESET that is used for transmitting group-common PDCCH (GC-PDCCH). GC-PDCCH comprises information on the COT structure in frequency (e.g. subbands) and time for both uplink (UL) and DL. In these cases the one or more BDRS associated with other CORESETs can be dropped.

If the resource elements for multiple BDRS associated with different CORESETs are non-overlapping, it is possible to transmit multiple BDRS.

In wideband operation BDRS on different sub-bands (20 MHz each) may be configured across sub-bands or separately per sub-band. This can depend on whether CORESET configuration is per BWP or per sub-band. The configuration may also be such that a gNB may transmit BDRS only via active sub-bands. According to an example an active sub-band is available when gNB is using a sub-band for DL transmission and/or possibly for UL transmission for the current COT. In such scenario the sub-band is unoccupied according to LBT definitions. An UE may be able to detect gNB Tx configuration from sub-band specific BDRS.

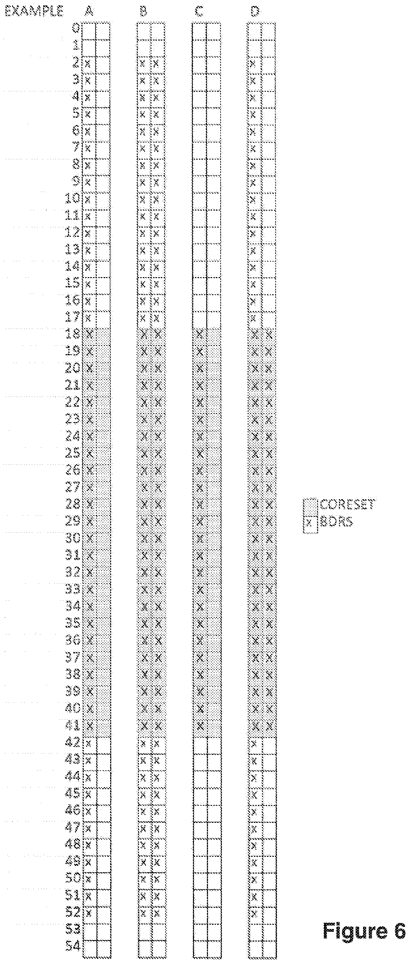

Figure 6 shows four exemplary configurations for BDRS assuming CORESET mapped to one 20 MHz sub-band having 30 kHz subcarrier spacing in use. PRBs including BDRS are denoted as 'x'. In all cases, the associated CORESET is shown in grey and consists of two Orthogonal Frequency Division Multiplexing (OFDM) symbols in time and 24 PRBs in frequency (PRBs #18 - 41). In example A wideband BDRS covers only the 1^{st} OFDM symbol of the CORESET. In example B wideband BDRS covers both OFDM symbols of the CORESET. In example C narrowband BDRS covers only the 1^{st} OFDM symbol. In example D wideband BDRS covers the 1^{st} OFDM symbol and narrowband BDRS covers the 2^{nd} symbol.

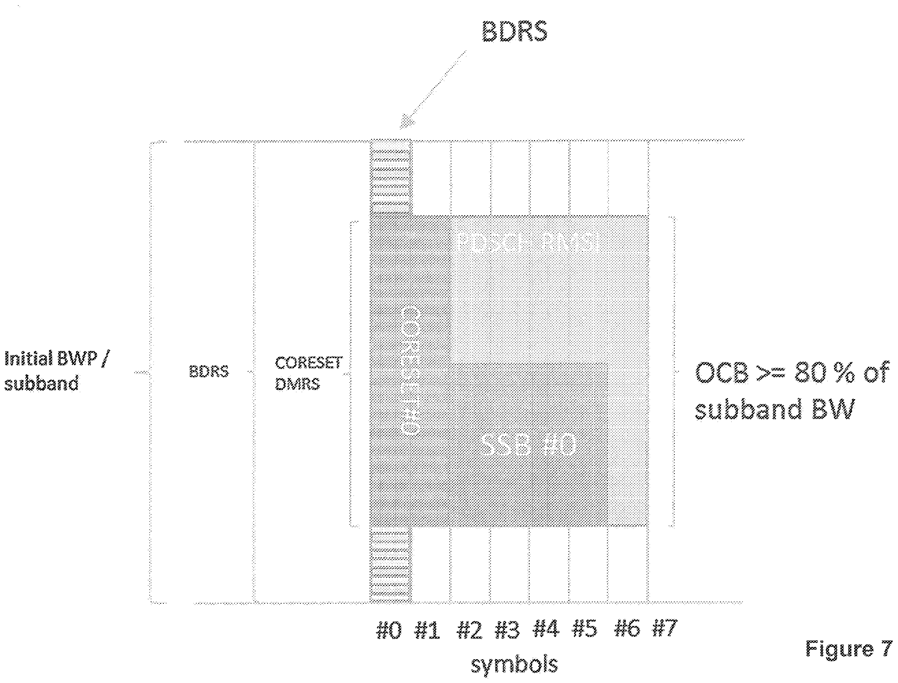

Another example of use of BDRS is presented in Figure 7 where BDRS associated with CORESET#0 is used for detecting the DRS. CORESET#0 may be used, e.g., for scheduling Physical Downlink Shared Channel (PDSCH) carrying Remaining Minimum System Information (RMSI). The Discovery Reference Signal (DRS) may comprise a synchronization signal block (SSB) or a set of SSBs and CORESET#0 (on PDCCH) and PDSCH for RMSI. PDSCH may also be provided for paging and the other system information (OSI) delivery.

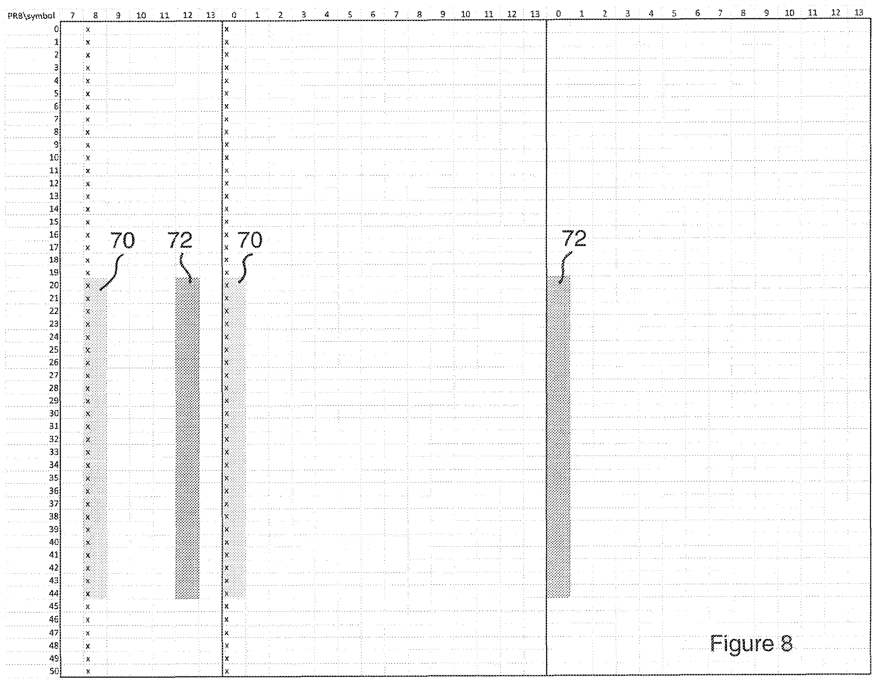

The example in Figure 8 shows the time domain aspect of a BDRS in one partial and two full slots of a DL burst where an associated CORESET has two search-spaces-sets: (i) TYPE-3 common search-space (CSS) and (ii) user-specific search-space (USS). Based on search-space set configuration, TYPE3 CSS is monitored only in monitoring occasions 70, while USS is monitored in both monitoring occasions 70 and 72. In this example BDRS inherits time domain allocation (i.e. monitoring occasion) from TYPE 3 search-space-set only in the associated CORESET.

A UE can be configured to enable BDRS reception e.g. such that for a PDCCH monitoring occasion the UE determines which CORESETs to monitor. Before monitoring for a BDRS, the UE needs to determine the associated CORESET configuration. Based on the CORESET configuration the UE knows where the BDRS are transmitted, in case base station is transmitting something in the first place. The UE can then monitor, and try to detect the BDRS. If there are BRDS the UE can detect them.

To avoid collision in case of multiple CORESETs monitored in the same monitoring occasion, the UE can be configured to determine which of the CORESETs has associated BDRS. The UE may also determine, based on a demodulation reference signal (DMRS) and/or another signal of the CORESET that has an associated BDRS, the parameters for the BDRS. The parameters may include, e.g., DMRS/BDRS sequence, time/frequency domain resource element allocation, precoding, quasi-collocation properties, etc. A UE can be configured to detect BDRS and subsequently monitor for PDCCH candidates in the associated CORESET.

The herein disclosed examples may provide certain advantage, for example in that use of the BDRS does not necessitate change of the UE PDCCH monitoring and/or UE channel estimation compared to how these are defined in 3GPP NR Rel-15. Compared to NR Rel-15 wideband reference signals (RS) the BDRS is not believed to compromise gains obtained by antenna diversity. Also, precoding is not believed to limit opportunities for UE-specific precoding (on PDCCH), because precoding granularity follows the REG bundle size. Compared to PDCCH DMRS confined only within resources of CORESET faster detection may be achieved as PDCCH DMRS can be located in the 1st OFDM symbol of the CORESET. DL burst detection RS is not believed to limit CORESET configuration flexibility introduced in NR Release 15.

The scenario is described above with reference to NR-Unlicensed operation. However, it is noted that similar principles can be used for other purposes as well. An example of such is use as a signal facilitating UE wake-up from DRX.

In general, the various embodiments of the invention may be implemented in hardware or special purpose circuitry, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

In accordance with an aspect such provide means for assisting in burst detection at a receiver apparatus at a transmitter apparatus. The means may comprise means for associating a reference signal for burst detection with at least one control resource set, and means for causing transmission of and/or transmitting the reference signal for burst detection based on at least one transmission property of the at least one associated control resource set and at least one additional transmission property.

In accordance with an aspect means for detecting reference signal bursts are provided, comprising means for determining at least one control resource set having transmission properties, means for monitoring for a transmission of a reference signal for transmission burst detection associated with the at least one control resource set, and means for detecting the reference signal for transmission burst detection based on at least one transmission property of the at least one associated control resource set and at least one additional transmission property.

In accordance win an aspect the means for determining inherit at least one of sequence precoding, resource element group bundle size, demodulation reference signal sequence, and quasi-collocation properties from the control resource set and use at least time and/or frequency domain resource element allocation as the additional transmission properties.

The means for detecting bursts can be configured to assume that a reference signal for transmission burst detection is always present when the apparatus has a valid physical downlink control channel monitoring occasion for a search space set associated with the control resource set with the reference signal for transmission burst detection.

The means for detecting bursts can be configured to assume that the transmitting apparatus always transmits a reference signal for transmission burst detection according to the at least one associated control resource set when the transmitting apparatus has acquired channel occupancy time.

The means for detecting bursts can be configured to assume that a reference signal for transmission burst detection is always present when a transmitting apparatus indicates for at least one receiving apparatus need to perform physical downlink control channel (PDCCH) monitoring at a monitoring occasion of a search space sets associated with the control resource set with the reference signal for transmission burst detection.

The means for monitoring can be configured to monitor multiple control resource sets in a monitoring occasion and to determine at least one control resource set with an associated reference signal for transmission burst detection

The receiving means can be further configured to, in response to detection of the reference signal for transmission burst detection, perform physical downlink control channel (PDCCH) candidate monitoring for at least one search space set associated with the at least one control resource set and the associated reference signal for transmission burst detection.

The means can be configured to process transmission properties of the at least one associated control resource set that comprise properties of a demodulation reference signal of the at least one associated control resource set.

The means can be configured to process transmission properties of the at least one associated control resource set that comprise at least one of sequence precoding, resource element group bundle size, demodulation reference signal sequence, and quasi-collocation properties. The means can be configured to process additional transmission properties that comprise at least one of a sequence of reference signal for transmission burst detection and time and/or frequency domain resource element allocation.

As used in this application, the term "circuitry" may refer to one or more or all of the following:
(a) hardware-only circuit implementations (such as implementations in only analogue and/or digital circuitry) and
(b) combinations of hardware circuits and software, such as (as applicable):
   (i) a combination of analogue and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this invention may be implemented by computer software executable by a data processor of a communication device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims.

## Claims

1. A receiving apparatus (200) comprising means arranged to detect transmission bursts in an unlicensed band, the means_configured to
determine at least one control resource set having transmission properties,
monitor for transmission of a reference signal for transmission burst detection associated with the at least one control resource set, wherein the reference signal associated with the at least one control resource set is transmitted via the entire at least one control resource set, and
detect the reference signal for transmission burst detection based on at least one transmission property of the at least one associated control resource set and at least one additional transmission property, wherein the at least one transmission property of the at least one associated control resource set comprises at least one of sequence precoding, resource element group bundle size, demodulation reference signal sequence, and quasi-collocation properties and the at least one additional transmission property comprises time and/or frequency domain resource element allocation of the reference signal.

2. An apparatus (200) according to claim 1, configured to assume that
a reference signal for transmission burst detection is always present when the apparatus (200) has a valid physical downlink control channel monitoring occasion for a search space set associated with the control resource set and the associated reference signal for transmission burst detection, and/or
a transmitting (250) apparatus always transmits a reference signal for transmission burst detection according to the at least one associated control resource set when the transmitting apparatus has acquired channel occupancy time, and/or
a reference signal for transmission burst detection is always present when the transmitting apparatus (250) indicates for at least one receiving apparatus a need to perform physical downlink control channel, PDCCH, monitoring at a monitoring occasion of a search space sets associated with the control resource set with the reference signal for transmission burst detection.

3. An apparatus (200) according to claim 1 or 2, further configured to, in response to detection of the reference signal for transmission burst detection, perform physical downlink control channel, PDCCH, candidate monitoring for at least one search space set associated with the at least one control resource set and the associated reference signal for transmission burst detection.

4. An apparatus (200) according to any of claims 1 to 3, configured to monitor multiple control resource sets in a monitoring occasion and to determine at least one control resource set with an associated reference signal for transmission burst detection.

5. An apparatus (200, 250) according to any preceding claim, wherein a reference signal for transmission burst detection outside the bandwidth of the at least one associated control resource set is configured to be transmitted in the first orthogonal frequency division multiplexing, OFDM, symbol determined by a search-space-set of the at least one associated control resource set.

6. An apparatus (200, 250) according to any preceding claim, configured to, when a demodulation reference signal sequence for an associated control resource set starts at the first physical resource block thereof, cyclically repeat the demodulation reference signal sequence for physical resource blocks of carrier bandwidth part lower than the first physical resource block.

7. An apparatus (200, 250) according to any preceding claim, configured to determine the starting position in frequency based on the demodulation reference signal when a sequence comprises an extended sequence of a demodulation reference signal of the associated control resource set that is cyclically mapped within the bandwidth of the reference signal for transmission burst detection.

8. An apparatus (200, 250) according to any preceding claim, configured to provide precoding granularity for the reference signal for transmission burst detection based on the granularity in frequency domain and/or time domain of the associated control resource set.

9. An apparatus (200, 250) according to any preceding claim, wherein collision handling between the reference signal for transmission burst detection and other signals is based on at least one of
providing relevant resource configuration information to all receiving apparatuses,
semi-static rate matching of physical downlink shared channel, PDSCH, or another control resource set around the reference signal for transmission burst detection,
dropping physical downlink control channel, PDCCH, candidates in other one or more control resource sets when colliding with the reference signal for transmission burst detection,
configuring the resource for the reference signal for transmission burst detection as a rate matching resource for physical downlink shared channel, PDSCH, and
multiplexing signals sharing substantially similar or same spatial domain characteristics in one symbol.

10. An apparatus (200, 250) according to any preceding claim, configured for simultaneous monitoring of multiple control resource sets, wherein the reference signal for transmission burst detection is selected based on at least one of
selection of the reference signal for transmission burst detection with a predefined identification of the associated control resource set,
selection of the reference signal for transmission burst detection with associated control resource set used for transmitting group-common physical downlink control channel, GC-PDCCH, and
determining that the resource elements for reference signals for transmission burst detection are non-overlapping.

11. A method for detecting transmission bursts in an unlicensed band, comprising
determining (304) at least one control resource set having transmission properties,
monitoring (306) for a transmission of a reference signal for transmission burst detection associated with the at least one control resource set, wherein the reference signal associated with the at least one control resource set is transmitted via the entire at least one control resource set, and
detecting (308) the reference signal for transmission burst detection based on at least one transmission property of the at least one associated control resource set and at least one additional transmission property, wherein the at least one transmission property of the at least one associated control resource set comprises at least one of sequence precoding, resource element group bundle size, demodulation reference signal sequence, and quasi-collocation properties and the at least one additional transmission property comprises time and/or frequency domain resource element allocation of the reference signal.

## Patentansprüche

1. Empfangsvorrichtung (200), die Mittel umfasst, die angeordnet sind, Übertragungsbursts in einem nicht lizenzierten Band zu detektieren, wobei die Mittel zu Folgendem ausgelegt sind
Bestimmen von mindestens einem Steuerressourcensatz mit Übertragungseigenschaften,
Überwachen auf eine Übertragung eines Referenzsignals für eine Übertragungsburstdetektion, das mit dem mindestens einen Steuerressourcensatz verknüpft ist, wobei das Referenzsignal, das mit dem mindestens einen Steuerressourcensatz verknüpft ist, via den gesamten mindestens einen Steuerressourcensatz übertragen wird, und
Detektieren des Referenzsignals für eine Übertragungsburstdetektion auf Basis von mindestens einer Übertragungseigenschaft des mindestens einen verknüpften Steuerressourcensatzes und mindestens einer zusätzlichen Übertragungseigenschaft, wobei die mindestens eine Übertragungseigenschaft des mindestens einen verknüpften Steuerressourcensatzes mindestens eine Sequenzvorcodierung, eine Ressourcenelementgruppenbündelgröße, eine Demodulationsreferenzsignalsequenz und Quasikollokationseigenschaften umfasst und die mindestens eine zusätzliche Übertragungseigenschaft eine Zeit- und/oder Frequenzdomänenressourcenelementzuteilung des Referenzsignals umfasst.

2. Vorrichtung (200) nach Anspruch 1, die dazu ausgelegt ist anzunehmen, dass
ein Referenzsignal für eine Übertragungsburstdetektion immer vorhanden ist, wenn die Vorrichtung (200) eine gültige physische Downlinksteuerkanalüberwachungsgelegenheit für einen Suchraumsatz aufweist, der mit dem Steuerressourcensatz und dem verknüpften Referenzsignal für eine Übertragungsburstdetektion verknüpft ist, und/oder
eine Übertragungs(250)-Vorrichtung gemäß dem mindestens einen verknüpften Steuerressourcensatz immer ein Referenzsignal für eine Übertragungsburstdetektion überträgt, wenn die Übertragungsvorrichtung eine Kanalbelegungszeit erfasst hat, und/oder
ein Referenzsignal für eine Übertragungsburstdetektion immer vorhanden ist, wenn die Übertragungsvorrichtung (250) für mindestens eine Empfangsvorrichtung eine Erfordernis zum Durchführen einer physischen Downlinksteuerkanal(PDCCH)-Überwachung bei einer Überwachungsgelegenheit eines Suchraumsätze anzeigt, der mit dem Steuerressourcensatz mit dem Referenzsignal für eine Übertragungsburstdetektion verknüpft ist.

3. Vorrichtung (200) nach Anspruch 1 oder 2, die in Reaktion auf eine Detektion des Referenzsignals für eine Übertragungsburstdetektion ferner dazu ausgelegt ist, für mindestens einen Suchraumsatz, der mit dem mindestens einen Steuerressourcensatz und dem verknüpften Referenzsignal für eine Übertragungsburstdetektion verknüpft ist, das Überwachen eines physischen Downlinksteuerkanal(PDCCH)-Kandidaten durchzuführen.

4. Vorrichtung (200) nach einem der Ansprüche 1 bis 3, die dazu ausgelegt ist, bei einer Überwachungsgelegenheit mehrere Steuerressourcensätze zu überwachen und mindestens einen Steuerressourcensatz mit einem verknüpften Referenzsignal für eine Übertragungsburstdetektion zu bestimmen.

5. Vorrichtung (200, 250) nach einem der vorhergehenden Ansprüche, wobei ein Referenzsignal für eine Übertragungsburstdetektion außerhalb der Bandbreite des mindestens einen verknüpften Steuerressourcensatzes dazu ausgelegt ist, im ersten orthogonalen Frequenzmultiplexing(OFDM)-Symbol übertragen zu werden, das durch einen Suchraumsatz des mindestens einen verknüpften Steuerressourcensatzes bestimmt wird.

6. Vorrichtung (200, 250) nach einem der vorhergehenden Ansprüche, die, wenn eine Demodulationsreferenzsignalsequenz für einen verknüpften Steuerressourcensatz am ersten physischen Ressourcenblock davon beginnt, dazu ausgelegt ist, die Demodulationsreferenzsignalsequenz für physische Ressourcenblöcke eines Trägerbandbreitenteils, der kleiner ist als der erste physische Ressourcenblock, zyklisch zu wiederholen.

7. Vorrichtung (200, 250) nach einem der vorhergehenden Ansprüche, die dazu ausgelegt ist, eine Startposition der Frequenz auf Basis des Demodulationsreferenzsignals zu bestimmen, wenn eine Sequenz eine erweiterte Sequenz eines Demodulationsreferenzsignals des verknüpften Steuerressourcensatzes umfasst, die in der Bandbreite des Referenzsignals für eine Übertragungsburstdetektion zyklisch zugeteilt ist.

8. Vorrichtung (200, 250) nach einem der vorhergehenden Ansprüche, die dazu ausgelegt ist, für das Referenzsignal für eine Übertragungsburstdetektion eine Vorcodierungsgranularität auf Basis der Granularität einer Frequenzdomäne und/oder einer Zeitdomäne des verknüpften Steuerressourcensatzes bereitzustellen.

9. Vorrichtung (200, 250) nach einem der vorhergehenden Ansprüche, wobei eine Kollisionshandhabung zwischen dem Referenzsignal für eine Übertragungsburstdetektion und anderen Signalen auf mindestens einem von Folgendem basiert
Bereitstellen von relevanten Ressourcenauslegungsinformationen für alle Empfangsvorrichtungen,
semistatisches Ratenabgleichen für einen gemeinsam verwendeten physischen Downlinkkanal, PDSCH, oder einen anderen Steuerressourcensatz um das Referenzsignal für eine Übertragungsburstdetektion,
Abtrennen von physischen Downlinksteuerkanal(PDCCH)-Kandidaten in einen oder mehrere andere Steuerressourcensätze, wenn sie mit dem Referenzsignal für eine Übertragungsburstdetektion kollidieren,
Auslegen der Ressource für das Referenzsignal für eine Übertragungsburstdetektion als eine Ratenabgleichressource für einen gemeinsam verwendeten physischen Downlinkkanal, PDSCH, und
Multiplexen von Signalen, die im Wesentlichen ähnliche oder selbe räumliche Domänencharakteristka in einem Symbol gemeinsam verwenden.

10. Vorrichtung (200, 250) nach einem der vorhergehenden Ansprüche, die zum gleichzeitigen Überwachen von mehreren Steuerressourcensätzen ausgelegt ist, wobei das Referenzsignal für eine Übertragungsburstdetektion auf Basis von mindestens einem von Folgendem ausgewählt wird
Auswahl des Referenzsignals für eine Übertragungsburstdetektion mit einer vordefinierten Identifizierung des verknüpften Steuerressourcensatzes,
Auswahl des Referenzsignals für eine Übertragungsburstdetektion mit einem verknüpften Steuerressourcensatz, der zum Übertragen eines gruppengemeinsamen physischen Downlinksteuerkanals, GC-PDCCH, verwendet wird, und
Bestimmen, dass sich die Ressourcenelemente für Referenzsignale für eine Übertragungsburstdetektion nicht überlappen.

11. Verfahren zum Detektieren von Übertragungsbursts in einem nicht lizenzierten Band, das Folgendes umfasst
Bestimmen (304) von mindestens einem Steuerressourcensatz mit Übertragungseigenschaften,
Überwachen (306) auf eine Übertragung eines Referenzsignals für eine Übertragungsburstdetektion, das mit dem mindestens einen Steuerressourcensatz verknüpft ist, wobei das Referenzsignal, das mit dem mindestens einen Steuerressourcensatz verknüpft ist, via den gesamten mindestens einen Steuerressourcensatz übertragen wird, und
Detektieren (308) des Referenzsignals für eine Übertragungsburstdetektion auf Basis von mindestens einer Übertragungseigenschaft des mindestens einen verknüpften Steuerressourcensatzes und mindestens einer zusätzlichen Übertragungseigenschaft, wobei die mindestens eine Übertragungseigenschaft des mindestens einen verknüpften Steuerressourcensatzes mindestens eine Sequenzvorcodierung, eine Ressourcenelementgruppenbündelgröße, eine Demodulationsreferenzsignalsequenz und Quasikollokationseigenschaften umfasst und die mindestens eine zusätzliche Übertragungseigenschaft eine Zeit- und/oder Frequenzdomänenressourcenelementzuteilung des Referenzsignals umfasst.

## Revendications

1. Appareil de réception (200) comprenant des moyens agencés pour détecter des salves de transmission dans une bande sans licence, les moyens étant configurés pour
déterminer au moins un ensemble de ressources de contrôle ayant des propriétés de transmission,
surveiller la transmission d'un signal de référence pour la détection de salves de transmission associé à l'au moins un ensemble de ressources de contrôle, dans lequel le signal de référence associé à l'au moins un ensemble de ressources de contrôle est transmis via la totalité du ou des ensembles de ressources de contrôle, et
détecter le signal de référence pour la détection de salves de transmission sur la base d'au moins une propriété de transmission de l'au moins un ensemble de ressources de contrôle associé et d'au moins une propriété de transmission supplémentaire, dans lequel l'au moins une propriété de transmission de l'au moins un ensemble de ressources de contrôle associé comprend au moins un parmi un pré-codage de séquence, une taille de faisceau de groupes d'éléments de ressources, une séquence de signaux de référence de démodulation et des propriétés de quasi-colocalisation, et l'au moins une propriété de transmission supplémentaire comprend une allocation d'élément de ressource dans le domaine temporel et/ou dans le domaine fréquentiel du signal de référence.

2. Appareil (200) selon la revendication 1, configuré pour supposer que
un signal de référence pour la détection de salves de transmission est toujours présent lorsque l'appareil (200) a une occasion de surveillance de canal physique de contrôle de liaison descendante valide pour un ensemble d'espaces de recherche associé à l'ensemble de ressources de contrôle et au signal de référence associé pour la détection de salves de transmission, et/ou
un appareil d'émission (250) émet toujours un signal de référence pour la détection de salves de transmission selon l'au moins un ensemble de ressources de contrôle associé lorsque l'appareil d'émission a acquis un temps d'occupation de canal, et/ou
un signal de référence pour la détection de salves de transmission est toujours présent lorsque l'appareil d'émission (250) indique à au moins un appareil de réception qu'il est nécessaire d'effectuer une surveillance de canal physique de contrôle de liaison descendante, PDCCH, à une occasion de surveillance d'ensembles d'espaces de recherche associés à l'ensemble de ressources de contrôle avec le signal de référence pour la détection de salves de transmission.

3. Appareil (200) selon la revendication 1 ou 2, configuré en outre pour, en réponse à la détection du signal de référence pour la détection de salves de transmission, effectuer une surveillance candidate de canal physique de contrôle de liaison descendante, PDCCH, pour au moins un ensemble d'espaces de recherche associé à l'au moins un ensemble de ressources de contrôle et au signal de référence associé pour la détection de salves de transmission.

4. Appareil (200) selon l'une des revendications 1 à 3, configuré pour surveiller de multiples ensembles de ressources de contrôle lors d'une occasion de surveillance, et pour déterminer au moins un ensemble de ressources de contrôle avec un signal de référence associé pour la détection de salves de transmission.

5. Appareil (200, 250) selon l'une des revendications précédentes, dans lequel un signal de référence pour la détection de salves de transmission en dehors de la largeur de bande de l'au moins un ensemble de ressources de contrôle associé est configuré pour être transmis dans le premier symbole de multiplexage par répartition en fréquences orthogonales, OFDM, déterminé par un ensemble d'espaces de recherche de l'au moins un ensemble de ressources de contrôle associé.

6. Appareil (200, 250) selon l'une des revendications précédentes, configuré pour, lorsqu'une séquence de signaux de référence de démodulation pour un ensemble de ressources de contrôle associé commence au premier bloc de ressources physiques de celui-ci, répéter cycliquement la séquence de signaux de référence de démodulation pour des blocs de ressources physiques de la partie de largeur de bande de porteuse inférieure au premier bloc de ressources physiques.

7. Appareil (200, 250) selon l'une des revendications précédentes, configuré pour déterminer la position de départ en fréquence sur la base du signal de référence de démodulation lorsqu'une séquence comprend une séquence étendue d'un signal de référence de démodulation de l'ensemble de ressources de contrôle associé qui est mappé cycliquement dans la largeur de bande du signal de référence pour la détection de salves de transmission.

8. Appareil (200, 250) selon l'une des revendications précédentes, configuré pour fournir une granularité de pré-codage pour le signal de référence pour la détection de salves de transmission sur la base de la granularité dans le domaine fréquentiel et/ou dans le domaine temporel de l'ensemble de ressources de contrôle associé.

9. Appareil (200, 250) selon l'une des revendications précédentes, dans lequel la gestion des collisions entre le signal de référence pour la détection de salves de transmission et d'autres signaux est basée sur au moins l'une des opérations suivantes
la fourniture d'informations de configuration des ressources pertinentes à tous les appareils de réception,
l'adaptation semi-statique de débit du canal physique partagé de liaison descendante, PDSCH, ou d'un autre ensemble de ressources de contrôle autour du signal de référence pour la détection de salves de transmission,
l'abandon des candidats au canal physique de contrôle de liaison descendante, PDCCH, dans d'autres un ou plusieurs ensembles de ressources de contrôle lorsqu'ils entrent en collision avec le signal de référence pour la détection de salves de transmission,
la configuration de la ressource pour le signal de référence pour la détection de salves de transmission en tant que ressource d'adaptation de débit pour le canal physique partagé de liaison descendante, PDSCH, et
le multiplexage de signaux partageant des caractéristiques dans le domaine spatial sensiblement similaires ou identiques en un seul symbole.

10. Appareil (200, 250) selon l'une des revendications précédentes, configuré pour surveiller simultanément de multiples ensembles de ressources de contrôle, dans lequel le signal de référence pour la détection de salves de transmission est sélectionné sur la base d'au moins une parmi
la sélection du signal de référence pour la détection de salves de transmission avec une identification prédéfinie de l'ensemble de ressources de contrôle associé,
la sélection du signal de référence pour la détection de salves de transmission avec l'ensemble de ressources de contrôle associé utilisé pour transmettre le canal physique de contrôle de liaison descendante commun au groupe, GC-PDCCH, et
la détermination du fait que les éléments de ressources pour les signaux de référence pour la détection de salves de transmission ne se chevauchent pas.

11. Procédé de détection de salves de transmission dans une bande sans licence, comprenant les étapes suivantes
déterminer (304) au moins un ensemble de ressources de contrôle ayant des propriétés de transmission,
surveiller (306) une transmission d'un signal de référence pour la détection de salves de transmission associé à l'au moins un ensemble de ressources de contrôle, dans lequel le signal de référence associé à l'au moins un ensemble de ressources de contrôle est transmis via la totalité du ou des ensembles de ressources de contrôle, et
détecter (308) le signal de référence pour la détection de salves de transmission sur la base d'au moins une propriété de transmission de l'au moins un ensemble de ressources de contrôle associé et d'au moins une propriété de transmission supplémentaire, dans lequel l'au moins une propriété de transmission de l'au moins un ensemble de ressources de contrôle associé comprend au moins un parmi un pré-codage de séquence, une taille de faisceau de groupes d'éléments de ressources, une séquence de signaux de référence de démodulation et des propriétés de quasi-colocalisation, et l'au moins une propriété de transmission supplémentaire comprend une allocation d'élément de ressource dans le domaine temporel et/ou dans le domaine fréquentiel du signal de référence.
